# EUROPEAN PATENT SPECIFICATION

(11) **EP 0 459 376 B1**
(45) Date of publication and mention of the grant of the patent: **22.09.1993**
(21) Application number: 91108653.6
(22) Date of filing: 28.05.1991
(51) Int. Cl.: F16K 5/00

(54) **A valve**
Ventil
Soupape

(30) Priority: 31.05.1990 DK 1348/90
(43) Date of publication of application: 04.12.1991
(73) Proprietor: BROEN ARMATUR A/S, DK-5610 Assens (DK)
(72) Inventor: Rasmussen, Helge Kjaer, DK-5683 Haarby (DK)
(74) Representative: Nielsen, Leif

(56) References cited:
- EP-A- 0 154 960
- EP-A- 0 200 563
- EP-A- 0 341 345
- DE-A- 3 815 710
- DE-C- 669 186
- US-A- 1 617 048

## Description

The present invention relates to a valve having a rotatable valve member having a flow passage and being mounted in a valve body having two flow ports running concentrically around a longitudinal axis through the valve body, said valve member is rotatable around an axis being perpendicular to the longitudinal axis of the valve body for rotation between a closed position wherein the flow passage is perpendicular to the longitudinal axis of the house and an open position wherein the flow passage runs concentrically around the longitudinal axis of the house and connects the flow ports, said valve body comprises a filter being arranged inside the valve member and a phial pocket member having a phial pocket arranged in the flow passage through the valve body and the valve member.

A valve of the above type is known from e.g. DE-A- 3,815,710. Such valve is primarily used as a shut-off valve for a fluid through a pipe in which the valve is inserted. Often valves of such type are used as shut-off pipes leading to a consumption site. In such pipes there is a need to have a phial pocket for a phial intended for metering the conditions of said fluid, e.g. the temperature. This may e.g be the case in connection with inlet and outlet pipes in a building conneted to a district heating station. In such pipes the filter is used for cleaning the fluid in the inlet pipe. In the prior art valve both the phial pocket member and the filter have to be dismounted in order to effect a cleaning of the filter. Accordingly, the prior art valve is disadvantageous as it will be impossible for the user to clean the filter and to effect a simultaneous sealing of the phial pocket member ensuring a correct metering of fluid conditions. In order to remedy this drawback it is possible to insert two or three separate elements in the pipe. This is inconvenient as such a series of elements requires a substantial built-in length. Moreover, it is more expensive to manufacture the separate elements and it is also labour-consuming to mount more elements in the pipes.

It is the object of the present invention to remedy the above-mentioned drawbacks and to provide a valve requiring the insertion of one unit only in a pipe, which is simple to manufacture and which also permits an easy cleaning of the filter and a simultaneous sealing of the phial pocket member.

According to the present invention this object is achieved with a valve of the above-mentioned type which is characterized in that the valve body comprises a cleaning opening arranged between two seals which are located at opposite ends of the valve member in order to provide a sealing between the valve body and the valve member, and that the phial pocket member is mounted in an opening in the wall of the valve body being different from the cleaning opening.

As the filter is arranged inside the valve member and as the phial pocket member has been mounted in the wall of the valve body which also comprises a separate cleaning opening it is possible to manufacture a single unit which may be inserted in a pipe and which permits a shut-off of the pipe as well as a cleaning of the fluid flowing through the pipe and the measuring of one or several conditions of the fluid, e.g. the temperature of the fluid. Owing to the separate cleaning opening the user may clean the filter without the necessity of removing the phial pocket member. Accordingly, the phial pocket member may be sealed to the valve body thereby ensuring that an unauthorized user cannot remove a phial element intentionally which is placed in the phial pocket member, e.g. in order to meter a temperature.

According to a preferred embodiment of the invention a cylindrical filter is used which is arranged concentrically around the axis of rotation of the valve member. When the phial pocket member is mounted through the actuating spindle of the valve member and the cleaning opening of the filter is arranged diametrically opposite the mounting opening of the phial pocket member an especially short built-in length is obtained as the valve needs only having an axial length as a conventional shut-off valve. Moreover, this embodiment is advantageous as it permits an easy mounting and maintenance.

When cleaning the filter it is only necessary to demount a cover covering the cleaning opening and then the filter may be replaced or cleaned. As the filter is arranged inside the valve member between the two seals between the valve body and the valve member it is possible to effect a cleaning of the filter after having rotated the valve member to its closed position. Accordingly, it is not necessary to dismount the phial pocket member. Only the amount of fluid being trapped inside the flow passage of the valve member will leak from the pipe.

The invention will now be explained in further detail with reference to the accompanying drawings wherein
- Fig. 1: is an axial section through a valve according to an embodiment of the invention,
- Fig. 2: is an axial section through a valve body of the valve shown in Fig. 1,
- Fig. 3: is an axial section through a valve according to a further embodiment of the invention,
- Fig. 4: is an axial section through a valve body of the valve shown in Fig. 3, and
- Fig. 5: is a section through a valve member of the valve shown in Fig. 3.

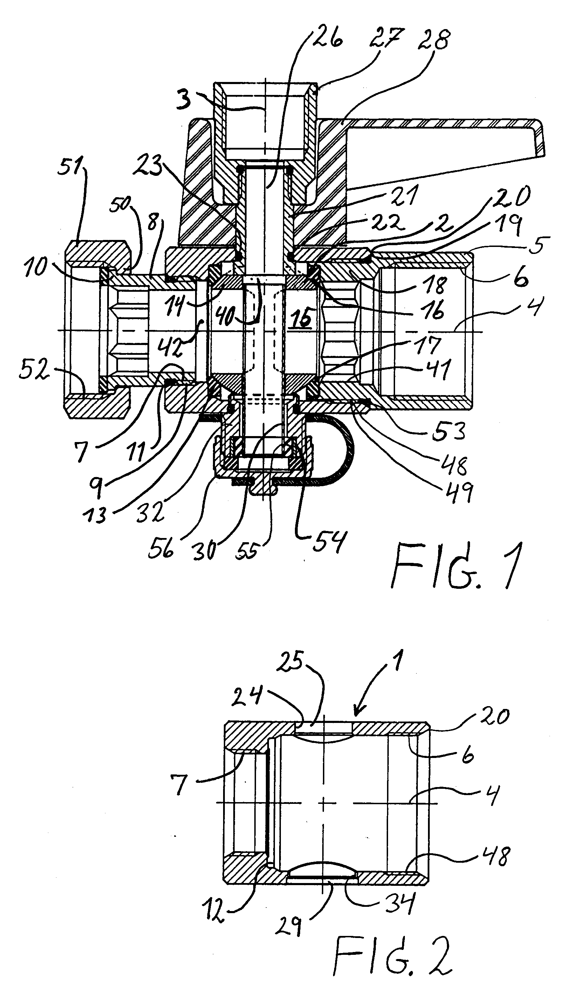

In Figs. 1 and 2 the reference number 1 denotes the valve body. In the illustrated embodiment the valve body 1 is manufactured from a piece of hexagonal rod material. The valve member 2 is arranged inside the valve body 1 which valve member is rotatable around an axis 3 running substantially perpendicular to a longitudinal axis 4 through the the valve body 1.

At one end of the valve body 1 a separate nipple 5 is provided which through threads 48,49 is firmly threaded to said one end of the valve body and which has an inner thread 6. At the other end the valve body 1 comprises an inner thread 7 in which a nipple 8 is mounted which is provided with an outer thread 9 being in engagement with the inner thread 7 of the valve body. At the other end of the nipple 8 an outwardly orientated collar 10 is provided which is in engagement with an inwardly orientated collar 50 on a nut 51. The nut 51 has an inner thread 52 for engagement with a pipe (not shown). Between the valve body 1 and the nipples 5,8 a seal is provided in the form of an O-ring 11,53. The nipple 5 maintains the valve member 2 in its correct position in the valve body 1 as explained below.

The valve body 1 comprises an annular groove 12 in which a seal 13 is provided, e.g. a teflon seal. The valve member 2 comprises a ball-shaped portion 14 (see also Fig. 5) having a flow channel 15 and being in contact with the seal 13. At its other side of the valve member 2 a corresponding seal 16 is arranged. The seal 16 is arranged in an annular groove 17 at the inner end of the nipple 5. The portion 18 of the nipple 5 which is provided with an outer thread 49 for engagement with the thread 48 of the valve body 1 is of such length that the valve member 2 is maintained between the two seals 13,16 with a sufficient pressure when the annular shoulder 19 of the nipple 5 is in contact with an annular end face 20 of the valve body 1. Accordingly, the valve member may rotate approximately 90° between an open position illustrated in Fig. 1 and a closed position in which the two seals 13,16 are in contact with unbroken spherical surfaces of the spherical portion 14. Moreover, the valve member 2 is sealed in relation to the valve body 1 as an actuating spindle 21 is provided with an annular groove 22 for an O-ring 23 sealing against the wall 24 in an opening 25 in which the actuating spindle 21 has been introduced. Furthermore, the actuating spindle 21 is provided with a bore 26 through which a phial pocket member may be introduced into the valve member. Moreover, the actuating spindle comprises a nut 27 securing a plastic mantle 28 which constitutes the actuating member of the valve. Alternatively, the actuating spindle may comprise a head as illustrated in Fig. 5. In Fig. 5 the bore is not through-going, but a hexagonal blind hole.

Opposite the mounting opening 25 of the actuating spindle, a further opening 29 is provided, viz. a cleaning opening having a diameter of a size permitting the introduction of a cylindrical filter 30 in a cylindrical bore 31 in the spherical portion 14 of the valve body 2. The cylindrical filter 30 is manufactured from a magnetizable material and an annular magnet may be arranged in contact with the filter. Accordingly, the filter may withhold impurities and magnetic material in a conventional way.

The filter 30 is secured in the valve body by means of a nipple 32 being mounted in a thread 34 in the opening 29 of the valve body 1. The nipple 32 is provided with a groove 54 in which a seal 55 is arranged. The seal 55 and the filter 30 are secured by means of a cap 56 which is threaded onto an outer thread on the nipple 32 and which may easily be demounted by a user when cleaning or replacing the filter 30.

Fig. 1 illustrates that the cylindrical bore for the engagement of the filter 30 extends into the top of the flow channel 15 (at 40). A distance exists to the spindle 21. Hereby a certain tolerance is ensured for the length of the cylindrical filter 30 and simultaneously it is also ensured that the cylindrical filter 30 totally covers the flow passage 15. The embodiment illustrated in Fig. 5 would also have the same possibility of tolerance. The flow passage 15 connects two flow ports 41, 42 in the valve body 1. It is noted that the flow port 41 is made in the nipple 5 in the form of an inner polygonal opening which makes it possible to screw the nipple into the valve body.

The illustrated valve is intended to be inserted in a pipe, e.g. an inlet or outlet pipe for district heating water supplied to a house, flat or the like. Preferably, the valve provides a very short built-in length as it contains a combination of three functions, viz. a shut-off function, a metering function and a filtering function. In the illustrated position the valve is open as the flow channel 15 connects the flow ports 41,42 of the valve body. When the filter is to be cleaned the valve member 2 is rotated through 90° whereby the two seals 13,16 enclose the volume located inside the flow passage in the valve member 2. Then the cap 56 is released and removed together with the filter 30. When cleaning the filter only the fluid volume located in the flow passage will leak. Accordingly, only a small waste will occur when cleaning or replacing the filter 30.

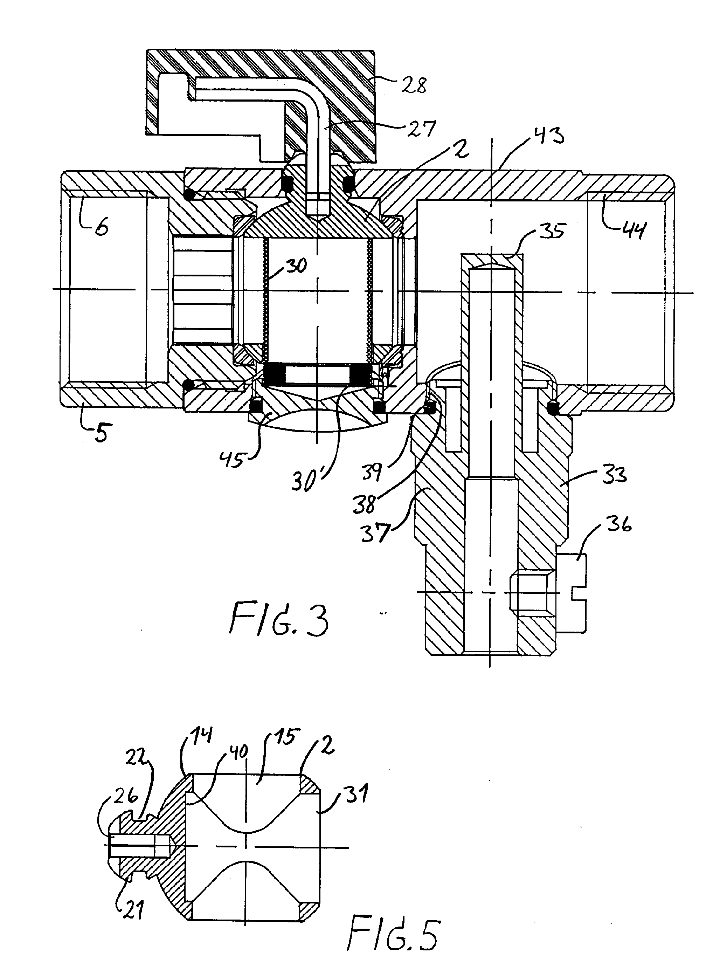

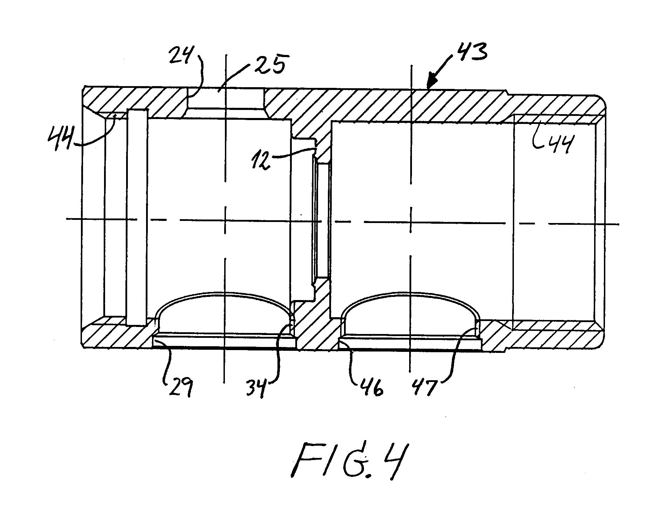

The embodiment illustrated in Figs 1 and 2 has the mimimum built-in length and will be preferred in most situations. However, there may also be situations in which it is desired to use the embodiment illustrated in Figs. 3 and 4.

It is noted that corresponding parts in the two embodiments are denoted with same reference numbers. Accordingly, a more detailed explanation of such items will not be given.

In the embodiment illustrated in Figs. 3 and 4 a separate phial pocket member 33 is used. The phial pocket member 33 comprises a phial pocket 35 arranged in the flow channel through the valve body and the valve member. The phial pocket 35 contains a phial element (not shown), e.g. an electric thermometer. Such phial element is maintained by means of a screw 36 mounted in the body portion 37 of the phial pocket member 33. The body portion 37 is provided with an outer thread 38 for engagement with a thread 47 of an opening 46 in the valve body. Between the valve body 1 and the phial pocket member 33 an O-ring 39 is arranged.

The valve body 43 is longer than the valve body 1. Also the valve body 43 is manufactured from a piece of hexagonal rod material. The valve body has threads arranged differently from those illustrated in Fig. 1. Both ends of the valve body 43 are provided with an inner thread 44. However, it is noted that the valve body 43 may be provided with an outwardly orientated collar corresponding to the collar 10 in Fig. 1.

In the left hand side (as seen in Figs. 3 and 4) of the valve body 43 an opening 29 has been arranged opposite the valve member 2. The opening 29 is covered by a cover 45. In this embodiment it will neither be necessary to remove the phial element nor the phial pocket member in order to effect a cleaning of the filter 30. It is sufficient to unscrew the cover 45 when the filter 30 is to be cleaned. The filter 30 may be manufactured from a magnetizable material and may be mounted in contact with a magnet 30'.

An embodiment using a combination of the two embodiments illustrated permits the use of two subsequently mounted phial pocket members 33 which may be desirable in case there is a need for metering more conditions of the fluid flowing through the valve.

In a manner known per se the valve member 2 illustrated in Fig. 5 may advantageously be mounted in the valve body 1 through the end in which the nipple 5 is subsequently mounted. The mounting is effected by introducing the valve member sheltered or capzised into the valve body and swinging it into its position before mounting the nipple 5. Accordingly, the valve requires the use of a mimimum of seals between the different elements and it is also possible to manufature the valve from a small number of elements in relation to conventional valves/fittings necessary in order to fulfil the same functions.

## Claims

1. A valve having a rotatable valve member (2) having a flow passage (15) and being mounted in a valve body (1) having two flow ports (41,42) running concentrically around a longitudinal axis (4) through the valve body (1), said valve member (2) is rotatable around an axis (3) being perpendicular to the longitudinal axis (4) of the valve body (1) for rotation between a closed position wherein the flow passage (15) is perpendicular to the longitudinal axis (4) of the house and an open position wherein the flow passage (15) runs concentrically around the longitudinal axis (4) of the house and connects the flow ports (41,42), said valve body (1) comprises a filter (30) being arranged inside the valve member (2) and a phial pocket member (33) having a phial pocket (35) arranged in the flow passage (15) through the valve body (1) and the valve member (2), **characterized** in that the valve body (1) comprises a cleaning opening (29) arranged between two seals (13,16) which are located at opposite ends of the valve member (2) in order to provide a sealing between the valve body and the valve member (2), and that the phial pocket member (33) is mounted in an opening (25,46) in the wall of the valve body being different from the cleaning opening (29).

2. A valve according to claim 1, **characterized** in that the filter (30) is a substantially cylindrical filter arranged concentrically around the axis of rotation (3) for the valve member (2) in a bore (31) opening onto the bottom of the valve member, said filter totally covers the flow passage (15) of the valve member, and that at the bottom of the valve body, the cleaning opening (29) is located substantially concentrically around the axis of rotation (3) of the valve member.

3. A valve according to claim (2), **characterized** in that the mounting opening (25) of the phial pocket member (33) is located diametrically opposite the cleaning opening (29) and running through an actuating spindle (21) of the valve member (2) and that the phial pocket (35) is located inside the cylindrical filter (30).

4. A valve according to claim 1, **characterized** in that the filter is a substantially circular or cup-shaped filter (30) arranged in a plane perpendicular to the flow passage (15) through the valve member, said filter covers the cross-section of said flow passage, and that the cleaning opening (29) is arranged concentrically around an axis running perpendicular to the axis of rotation (3) of the valve member and in a plane perpendicular to the longitudinal axis (4) of the valve body.

5. A valve according to any one of claims 1-4, **characterized** in that the valve member (2) is a ball valve member (14), that the valve body (1) comprises a support (12) for the first seal (13), that the inner diameter of the valve body is of a sufficient magnitude for the ball valve member (2) may be capsized into its position, said ball valve member comprises an actuating member being protruding from the spherical face and being arranged for extending through an opening (25) in the wall of the valve body, and that the second seal (16) is supported by a locking element (5) being screwed or pressed into the valve body.

6. A valve according to claim 5, **characterized** in that an inner thread (52) is provided at the side of the valve body (1) having the fixed support (12) for the first seal (13), and that the locking element (5) comprises a nipple having an identical inner thread (6) at the side facing away from the valve body.

7. A valve according to claim 5, **characterized** in that the side of the valve body (1) being provided with the fixed support (12) for the first seal (13) said valve body is provided with an outer thread (not shown), and that the locking element (5) comprises a nipple having a corresponding inner thread (6) at the side facing away from the valve body.

8. A valve according to any one of claim 1-7, **characterized** in that the filter (30) is manufactured from a magnetizable material, and that a magnet (30') is mounted in contact with the filter.

9. A valve according to any one of the claim 1-3 and 5-8, **characterized** in that the valve body (1) is manufactured from a piece of hexagonal rod material, and that the axis of rotation (3) of the valve member (2) is perpendicular to two opposite faces of the valve body.

10. A valve according to claim 4, **characterized** in that the valve member (2) is manufactured from a piece of hexagonal rod material, and that the axis of rotation (3) of the valve member passes through two opposite edges of the valve body (1).

## Patentansprüche

1. Ventil mit einem drehbaren Ventilkörper (2), der einen Strömungskanal (15) aufweist und in ein Ventilgehäuse (1) eingesetzt ist, das zwei Strömungsdurchlässe (41, 42) aufweist, die das Ventilgehäuse (1) konzentrisch um eine Längsachse (4) durchsetzen, wobei der Ventilkörper (2) um eine zur Längsachse (4) des Ventilgehäuses (1) rechtwinklige Achse (3) verdrehbar ist zur Verdrehung zwischen einer geschlossenen Stellung, in der der Strömungskanal (15) zu der Längsachse (4) des Gehäuses rechtwinklig ist, und einer offenen Stellung, in der der Strömungskanal (15) die Längsachse (4) des Gehäuses konzentrisch umgibt und die Strömungsdurchlässe (41, 42) verbindet, wobei das Ventilgehäuse (1) einen im Inneren des Ventilkörpers (2) angeordneten Filter (30) und ein Fläschchenbehälterteil (33) umfaßt, das einen Fläschchenbehälter (35) aufweist, der durch das Ventilgehäuse (1) und den Ventilkörper (2) in dem Strömungskanal (15) angeordnet ist, dadurch **gekennzeichnet**, daß das Ventilgehäuse (1) eine Reinigungsöffnung (29) aufweist, die zwischen zwei Dichtungen (13, 16) angeordnet ist, die an gegenüberliegenden Enden des Ventilkörpers (2) angeordnet sind, um eine Abdichtung zwischen dem Ventilgehäuse und dem Ventilkörper (2) zu bewirken, und daß das Fläschchenbehälterteil (33) in einer Öffnung (25, 46) in der Wand des Ventilgehäuses angeordnet ist, die von der Reinigungsöffnung (29) verschieden ist.

2. Ventil nach Anspruch 1, dadurch **gekennzeichnet**, daß der Filter (30) ein im wesentlichen zylindrischer Filter ist, der um die Drehachse (3) des Ventilkörpers (2) in einer in der Unterseite des Ventilkörpers mündenden Bohrung (31) konzentrisch angeordnet ist, wobei der Filter den Strömungskanal (15) des Ventilkörpers vollständig verdeckt, und daß an der Unterseite des Ventilgehäuses die Reinigungsöffnung (29) im wesentlichen konzentrisch zur Drehachse (3) des Ventilkörpers angeordnet ist.

3. Ventil nach Anspruch 2, dadurch **gekennzeichnet**, daß die Lageröffnung (25) des Fläschchenbehälterteils (33) der Reinigungsöffnung (29) diametral gegenüberliegend angeordnet ist und durch eine Betätigungsspindel (21) des Ventilkörpers (2) verläuft und daß der Fläschchenbehälter (35) im Inneren des zylindrischen Filters (30) angeordnet ist.

4. Ventil nach Anspruch 1, dadurch **gekennzeichnet**, daß der Filter ein im wesentlichen kreisrunden oder becherförmiger Filter (30) ist, der in einer zu dem Strömungskanal (15) durch den Ventilkörper rechtwinkligen Ebene angeordnet ist, daß der Filter den Querschnitt dieses Strömungskanals verdeckt und daß die Reinigungsöffnung (29) zu einer Achse konzentrisch angeordnet ist, die zur Drehachse (3) des Ventilkörpers rechtwinklig verläuft, und in einer zur Längsachse (4) des Ventilgehäuses rechtwinkilgen Ebene angeordnet ist.

5. Ventil nach einem der Ansprüche 1 bis 4, dadurch **gekennzeichnet**, daß der Ventilkörper (2) ein Kugelventilkörper (14) ist, daß das Ventilgehäuse (1) eine Abstützung für die erste Dichtung (13) aufweist, daß der Innendurchmesser des Ventilgehäuses ausreichend ist, damit der Kugelventilkörper (2) in seine Stellung gekippt werden kann, daß der Kugelventilkörper ein Betätigungsteil aufweist, das von der Kugelfläche besteht und sich durch eine Öffnung (25) in der Wand des Ventilgehäuses erstreckt, und daß die zweite Dichtung (16) von einem in das Ventilgehäuse eingeschraubten oder eingepreßten Verriegelungselement (5) abgestützt ist.

6. Ventil nach Anspruch 5, dadurch **gekennzeichnet,** daß ein Innengewinde an der die feste Abstützung (12) für die erste Dichtung (13) aufweisenden Seite des Ventilgehäuses (1) angeordnet ist und daß das Verriegelungselement (5) aus einem Rohrstutzen besteht, der an seiner von dem Ventilgehäuse abgekehrten Seite ein identisches Innengewinde (6) aufweist.

7. Ventil nach Anspruch 5, dadurch **gekennzeichnet**, daß die mit der festen Abstützung (12) für die erste Dichtung (13) versehene Seite des Ventilgehäuses (1) mit einem (nicht gezeigten) Außengewinde versehen ist und daß das Verriegelungselement (5) aus einem Rohrstutzen besteht, der an seiner von dem Ventilgehäuse abgekehrten Seite ein entsprechendes Innengewinde (6) aufweist.

8. Ventil nach einem der Ansprüche 1 bis 7, dadurch **gekennzeichnet**, daß der Filter (30) aus einem magnetisierbaren Material hergestellt ist und daß ein Magnet (30') mit dem Filter in Berührung steht.

9. Ventil nach einem der Ansprüche 1 bis 3 und 5 bis 8, dadurch **gekennzeichnet**, daß das Ventilgehäuse (1) aus einem Stück eines sechseckigen Stangenmaterials hergestellt ist und daß die Drehachse des Ventilkörpers (2) zu den beiden gegenüberliegenden Seiten des Ventilgehäuses rechtwinklig ist.

10. Ventil nach Anspruch 4, dadurch **gekennzeichnet**, daß der Ventilkörper (2) aus einem Stück eines sechseckigen Stangenmaterials hergestellt ist und daß die Drehachse des Ventilkörpers durch die beiden gegenüberliegenden Kanten des Ventilgehäuses (1) hindurchgeht.

## Revendications

1. Vanne avec corps de vanne rotatif (2) comprenant un canal de passage (15) et montée dans une boîte à vanne (1) comprenant deux portes de passage (41,42) placées concentriquement autour d'un axe longitudinal (4) à travers la boîte à vanne (1), lequel corps de vanne (2) tourne autour d'un axe (3) perpendiculaire à l'axe longitudinal (4) de la boîte à vanne (1) pour la rotation entre une position fermée où le canal de passage (15) est perpendiculaire à l'axe longitudinal (4) de la boîte et une position ouverte où le canal de passage (15) s'étend concentriquement autour de l'axe longitudinal (4) de la boîte et relie les portes de passage (41,42), laquelle boîte à vanne (1) comprend un filtre (30) placé à l'intérieur du corps de la vanne (2) et un organe de poche bulbe (33) où la poche bulbe proprement dite (35) est placée dans le canal de passage (15) à travers la boîte à vanne (1) et le corps de la vanne (2), caractérisée en ce que la boîte à vanne (1) comprend en outre une ouverture de nettoyage (29) placée entre deux éléments d'étanchéité (13,16) situés à des côtés opposés du corps de la vanne (2) pour assurer l'étanchéité entre la boîte à vanne et le corps de la vanne (2), et que l'organe de poche bulbe (33) est monté dans une ouverture (25,46) dans le paroi de la boîte à vanne différente de l'ouverture de nettoyage (29).

2. Vanne selon la revendication 1, caractérisée en ce que le filtre (30) est un filtre à peu près cylindrique placé concentriquement autour de l'axe de rotation (3) du corps de la vanne (2) dans un évidement (31) s'ouvrant vers le fond du corps de la vanne, lequel filtre couvre entièrement le canal de passage (15) du corps de la vanne, et qu'au fond de la boîte à vanne, l'ouverture de nettoyage (29) est placée à peu près concentriquement autour de l'axe de rotation (3) du corps de la vanne.

3. Vanne selon la revendication 2, caractérisée en ce que l'ouverture de montage (25) de l'organe de poche bulbe (33) est placée diamétralement opposée à l'ouverture de nettoyage (29) et s'étend à travers un arbre de transmission (21) du corps de la vanne (2) et que la poche bulbe (35) est placée à l'intérieur du filtre cylindrique (30).

4. Vanne selon la revendication 1, caractérisée en ce que le filtre est un filtre à peu près circulaire ou en forme de coupe (30) placé à un niveau perpendiculaire au canal de passage (15) du corps de la vanne, lequel filtre couvre la section transversale du canal de passage, et que l'ouverture de nettoyage (29) est placée concentriquement autour d'un axe s'étendant perpendiculairement à l'axe de rotation (3) du corps de la vanne et à un niveau perpendiculaire à l'axe longitudinal (4) de la boite à vanne.

5. Vanne selon n'importe quelle des revendications 1-4, caractérisée en ce que le corps de la vanne (2) est un corps de vanne à bille (14), que la boîte à vanne (1) comprend un support (12) du premier élément d'étanchéité (13), que le diamètre intérieur de la boîte à vanne est d'une grandeur permettant que le corps de vanne à bille (2) comprenant un organe de manoeuvre saillant de la surface sphérique et prévu pour s'étendre à travers une ouverture dans le paroi de la boîte peut être basculé en place, et que le second élément d'étanchéité (16) est soutenu par un élément de blocage (5) vissé ou pressé dans la boîte à vanne.

6. Vanne selon la revendication 5, caractérisée en ce qu'à l'extrémité munie d'un support fixe (12) pour le premier élément d'étanchéité (13), la boite est munie d'un filetage intérieur (52), et que l'élément de blocage (5) comprend un raccord avec un filetage intérieur identique (6) à l'extrémité éloignée de la boîte à vanne.

7. Vanne selon la revendication 5, caractérisée en ce qu'à l'extrémité munie d'un support fixe (12) du premier élément d'étanchéité (13), la boîte à vanne (1) est munie d'un filetage extérieur (pas montré) et que l'élément de blocage (5) comprend un raccord avec un filetage intérieur correspondant (6) à l'extrémité éloignée de la boite à vanne.

8. Vanne selon n'importe quelle des revendications 1-7, caractérisée en ce que le filtre (30) est fait dans un matériau aimantable et qu'un aimant (30')est monté en contact avec le filtre.

9. Vanne selon n'importe quelle des revendications 1-3 et 5-8, caractérisée en ce que la boîte à vanne (1) est faite d'un profilé hexagone et que l'axe de rotation (3) du corps de la vanne (2) est perpendiculaire à deux faces opposées de la boîte à vanne.

10. Vanne selon la revendication 4, caractérisé en ce que le corps de la vanne (2) est fait d'un profilé hexagone, et que l'axe de rotation (3) du corps de la vanne passe par deux angles opposés de la boîte à vanne (1).
